(19) Europäisches Patentamt
European Patent Office
Office européen des brevets

(11) EP 4 072 063 A1

(12) EUROPEAN PATENT APPLICATION

(43) Date of publication:
12.10.2022 Bulletin 2022/41

(21) Application number: 21216979.1

(22) Date of filing: 22.12.2021

(51) International Patent Classification (IPC):
H04L 9/00 (2022.01)    G06F 21/64 (2013.01)
H04L 9/32 (2006.01)

(52) Cooperative Patent Classification (CPC):
G06F 21/64; H04L 9/3297; H04L 9/50

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 06.04.2021 CN 202110365533

(71) Applicant: Zhiji Automotive Technology Co., Ltd.
Shanghai 200131 (CN)

(72) Inventors:
• QIAN, Gang
Shanghai, 200131 (CN)
• WANG, Ruixue
Shanghai, 200131 (CN)

• CHEN, Lei
Shanghai, 200131 (CN)
• CHU, Zhangkaiwen
Shanghai, 200131 (CN)
• FANG, Minwei
Shanghai, 200131 (CN)
• LIU, Ziyu
Shanghai, 200131 (CN)
• ZHANG, Yujia
Shanghai, 200131 (CN)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) **BLOCKCHAIN-BASED METHOD, DEVICE AND SYSTEM FOR PROCESSING VEHICLE DRIVING DATA**

(57) The present disclosure provides a blockchain-based method, device and system for processing vehicle driving data. The method includes: within a specific period, recording the vehicle driving data, performing consolidating cleaning or cleansing thereon, and uploading the processed vehicle driving data to a blockchain for preservation; and when a blockchain node generates a block, reading the vehicle driving data and its changes within the specific period from centralized data, confirming value measurement weighting factors with an f function based on the vehicle driving data, packing the value measurement weighting factors, performing a hash operation thereon and uploading the same to the blockchain.

Fig.1

## Description

### TECHNICAL FIELD

The present disclosure relates to vehicle driving data processing, and more specifically, to a blockchain-based method, device, and system for processing vehicle driving data.

### BACKGROUND

With the advancement of science and technology, social development has entered the digital age, and everything can be digitized. As a result, the automotive industry is changing significantly. New technologies are driving the entire automotive industry to rapidly evolve towards electric vehicles, intelligence, and connectivity. Traditional automobiles are facing severe challenges from various new energy vehicle manufacturers, and more electric vehicles are manufactured. In the past, automakers sold products to end users level by level through various channels. Now, both new automobile manufacturers and traditional automobile factories in transition are directly selling automobile products to users through the Internet, gradually establishing a huge community of automobile users.

A user is the owner of a vehicle and the vehicle is used as his/her production tool. The user vehicle consumes a large amount of energy along with the accumulation of mileage during the entire life period. The user's vehicle or smart device, digital terminal, etc. are generating a large amount of data all the time, automobile factories or sales agencies acquire a large amount of user behavior data and vehicle driving data, and these data are providing great contributions and value for the iterative evolution of enterprise products and social progress. However, massive data has brought high storage costs. Due to the limitations of the technology of the times, the massive data of the entire industry has not been fully exploited. Many potential values contained in the massive data generated by energy consumption are inevitably ignored and discarded, and users and their vehicles as the sources of these massive amounts of data have not obtained the corresponding value measurement, recognition and rewards.

Among them, vehicle mileage is one of the most well-known digital measurement methods in the automobile industry. When other vehicle driving data can be converted into mileage and measured in a unified manner, the amount of information and the value contained in the mileage should be evaluated newly, measured fairly and given new value and meaning, such that the data generated by energy consumption and the accumulation of mileage can bring observable and measurable value. Through value recognition, users can be motivated or rewarded, and a positive and benign ecological cycle can be established.

### SUMMARY

Problems to be solved by the present disclosure:
In view of the above problems, an objective of the present disclosure is to provide a blockchain-based method, device, and system for processing vehicle driving data, which can perform fair measurement and value recognition on the vehicle driving data, issue digital tokens accordingly to give users equally matching value incentives or value proof rewards, make full use of automobile data, and expand new applications of the blockchain technology.

Technical means to solve the problems:
The present disclosure provides a method for processing vehicle driving data based on blockchain, intended to measure the value of users and their vehicle data, determine a target object and issue a target quota of digital equity certificates thereto, comprising the steps of:

on-chain preservation of the vehicle driving data, comprising: within a specific period, recording the vehicle driving data, performing consolidating cleaning or cleansing thereon, and uploading the processed vehicle driving data to a blockchain for preservation; and

rolling calculation of a value measurement weighting factor of the vehicle driving data, comprising: when a blockchain node generates a block, reading the vehicle driving data and its changes within the specific period from centralized data, confirming value measurement weighting factors of the data with an f function based on the vehicle driving data, packing the value measurement weighting factors, performing a hash operation thereon and uploading the same to the blockchain.

According to the present disclosure, vehicle driving data is uploaded to a centralized database within a unit time period, and changes in the vehicle driving data within the time period are calculated once per unit time period. Without loss of generality, a change in vehicle mileage may be taken as an example every hour. A user's vehicle driving data (mileage in the example) is converted into a value measurement weighting factor with an f function according to the mileage change, and the data value measurement weighting factor of each vehicle corresponding to each measurement period is uploaded to the chain for preservation in combination with the blockchain technology, to realize the fairness, non-tamperability, trustworthiness and traceability of the value measurement of the data generated by the vehicle driving.

Optionally, in the present disclosure, a proportion of the value measurement weighting factor of a single user's vehicle to a sum of the value measurement weighting factors of all users' vehicles is calculated.

According to the present disclosure, the proportion of the value measurement weighting factor to the whole represents a probability that each user's vehicle is determined as a target object, that is, the probability of being issued a digital token, which can ensure that the data value generated by a vehicle with more mileage measurements per unit time period corresponds to a higher probability of being issued a digital token than a vehicle with less mileage.

Optionally in the present disclosure, a hash value obtained after the changes in the vehicle driving data are packed is added with hash values of a predetermined number of blocks in the blockchain inferred forward from a time point of calculation, and then hashed to obtain a hash value to be used as a random number seed, and the target object is determined with the random number seed.

According to the present disclosure, since the hash value of the data packet is uploaded to the chain for preservation, when a blockchain node generates a block, it reads the changes in the vehicle driving data of each user within a specific period from a centralized database, and additionally records hash values of the mileage change data packets of all users, so the random number seed as calculated is fair, just, true and credible. In this way, the users gradually obtain more digital tokens issued by fair measurement through the accumulation of mileage as driving data, which improves the enthusiasm and initiative of daily driving and the expectation of obtaining more value recognition, and establishes a positive incentive and feedback mechanism and a virtuous ecological cycle.

Optionally, in the present disclosure, the value measurement weighting factors are obtained through normalized measurement, and the normalized measurement includes:

selecting a unified metric in the vehicle data;
establishing a proportional relationship for converting different types of vehicle data into a uniform measurement unit and performing conversion;
confirming the value measurement weighting factors of the data with the f function based on the vehicle driving data; and
forming a set with the data value measurement weighting factors of all users' vehicles within a unit time period, and calculating a proportion of each data value measurement weighting factor in the set.

In this way, the normalized measurement may use different types of vehicle driving data, rather than being limited to the same kind of data, such that the obtained value measurement weighting factor is more reliable, and the vehicle driving data can be used more fully. It is further ensured that the data value generated by a vehicle with more mileage measurements per unit time period corresponds to a higher probability of being issued a digital token.

Optionally, in the present disclosure, the target quota is calculated with the vehicle driving data of all valid vehicles collected by the blockchain node based on the total amount of digital equity certificates.

Optionally, in the present disclosure, data after the target quota is issued to the target object is updated in a transaction manner through a smart contract of the blockchain.

Optionally, in the present disclosure, the vehicle driving data is vehicle mileage, vehicle location change, or vehicle power battery energy consumption.

The present disclosure provides a blockchain-based device for processing vehicle driving data, including:

a data acquiring unit configured to acquire vehicle driving data of a vehicle;
a data sorting unit configured to perform data consolidating cleaning or cleansing on the acquired vehicle driving data, perform quality inspection and validation, deduplicate errors and unreasonable data, and upload the processed data to a blockchain for preservation through the blockchain; and
a data calculating unit configured to evaluate and recognize the value of all users' vehicles that meet rules within different predetermined time periods, convert the processed vehicle driving data into value measurement weighting factors, pack the value measurement weighting factors, perform a hash operation thereon, upload the same to the blockchain for preservation, calculate a target object, and issue a digital token to the target object.

Optionally, in the present disclosure, the data calculating unit includes:

a weighting factor calculating module configured to read changes in the vehicle driving data within a specific period from centralized data when a blockchain node generates a block, and calculate the value measurement weighting factors with an f function based on the vehicle driving data; and
an on-chain preservation module configured to pack the value measurement weighting factors, perform a hash operation thereon and upload the hash result to the blockchain for preservation.

Optionally, in the present disclosure, the data calculating unit further includes:
an issuance probability calculating module configured to calculate a proportion of the value measurement weighting factor of a single user's vehicle to a sum of the value measurement weighting factors of all users' vehicles as a probability that the single user's vehicle is selected as the target object.

Optionally, in the present disclosure, the data calculating unit includes:
a target object determining module configured to add hash values of a specified number of blocks in the blockchain inferred forward from a time point of calculation to a hash value obtained after the changes in the vehicle driving data are packed, perform a hash operation on the obtained result, take the obtained hash value as a random number seed, and determine the target object with the random number seed.

Optionally in the present disclosure, the data calculating unit includes:
a target quota calculating module configured to calculate a target quota with the vehicle driving data of all valid vehicles collected by the blockchain node based on the total amount of digital equity certificates.

The present disclosure provides a system for processing vehicle driving data, including:

a data monitoring device located at a vehicle; and
the above-mentioned device for processing vehicle data which is intended to measure the value of users and their vehicle data, determine a target object and issue a target quota of digital equity certificates thereto.

The present disclosure provides an electronic device, including:

at least one processor, and
a memory coupled to the at least one processor, wherein the memory stores instructions that, when being executed by the at least one processor, cause the at least one processor to perform the processing method which is intended to measure the value of users and their vehicle data, determine a target object and issue a target quota of digital equity certificates thereto.

The present disclosure provides a machine-readable storage medium that stores executable instructions that, when executed, cause the machine to perform the processing method which is intended to measure the value of users and their vehicle data, determine a target object and issue a target quota of digital equity certificates thereto.

Effects of the present disclosure:
The present disclosure provides a blockchain-based method, device and system for processing vehicle driving data, which can fairly measure the value of users and their vehicles based on unutilized mileage data (such as mileage, location and energy consumption), determine a target object and issue a target quota of digital equity certificates thereto, which makes full use of the automobile data and expand a new application of the blockchain technology.

## BRIEF DESCRIPTION OF THE DRAWINGS

FIG. 1 is a flowchart of a blockchain-based method for processing vehicle driving data according to the present disclosure;
FIG. 2 is a schematic diagram of the structure of a blockchain-based device for processing vehicle driving data according to the present disclosure; and
FIG. 3 is a graph showing a relationship between value measurement weighting factors and mileage data.

## DETAILED DESCRIPTION

The present disclosure will be further described below in conjunction with the following embodiments. It should be understood that the following embodiments are only used to illustrate the present invention, rather than limiting the present invention. The same or corresponding reference numerals in the drawings denote the same components, and repeated descriptions are omitted.

Blockchain is a chain data structure formed by sequentially connecting and combining data blocks in chronological order, and cryptographically guarantees that the data blocks cannot be tampered with or forged. Each block in the blockchain is linked to an immediately preceding block in the blockchain by including an encrypted hash thereof. Each block also includes a timestamp, an encrypted hash of the block, and one or more transactions. Transactions that have been validated by the nodes of the blockchain network are hashed and a Merkle tree is formed. In the Merkle tree, the data at the leaf nodes is hashed, and for each branch of the Merkle tree, all the hash values of the branch are concatenated at the root of the branch. The above processing is performed on the Merkle tree until the root node of the entire Merkle tree. The root node of the Merkle tree stores hash values representing all data in the Merkle tree. When a hash value claims to be a transaction stored in the Merkle tree, it can be quickly validated by judging whether the hash value is consistent with the structure of the Merkle tree.

Blockchain network is a network of computing nodes used to manage, update, and maintain one or more blockchain structures. In this specification, the blockchain network may include a public blockchain network, a private blockchain network, or a consortium blockchain network. A consensus protocol is implemented in the public blockchain network. Examples of consensus protocols include but are not limited to Proof of Mileage (POM).

Internet of Things (IOT) is an information automobilerier based on the Internet, traditional telecommunications networks, etc., which allows all ordinary physical objects that can be independently addressed to form an interconnected network. The Internet of Vehicles (IOV) concept is derived from the Internet of Things, which is a huge interactive network composed of information such as vehicle location, speed, and route. Through GPS, RFID, sensors, camera image processing and other devices mounted on the vehicle, the vehicle may complete the acquisition of its own environment and status information. Through the Internet technology, all vehicles may transfer their various information transmissions to the central processing unit. Through the computer technology, the information of these large amounts of vehicles may be analyzed and processed, so as to calculate the best route for different vehicles, report the road conditions in time and arrange the signal light period, so as to realize a system which can extract and effectively utilize the attribute information, and static and dynamic information of all vehicles on the information network platform; and according to different functional requirements, provide comprehensive services, effectively supervise the operating statuses of all vehicles .

The present disclosure discloses a blockchain-based method for processing vehicle driving data, which is intended to measure the value of users and their vehicle data, determine a target object and issue a target quota of digital equity certificates thereto. Through technologies such as the Internet of Vehicles, the method uniformly collects users' mileages converted from the energy consumption of the vehicles (such as electric energy), a large amount of vehicle sensor data generated during driving, user driving behavior data, etc., performs data cleaning, performs quality inspection and validation, and deduplicates errors and unreasonable data, and performs decentralized on-chain preservation on the processed driving data through a blockchain to ensure the authenticity and reliability of the data and the data not being tampered with.

In the present disclosure, key data items in the driving process (i.e., vehicle driving data) that need to be collected, cleaned, validate, calculated and processed include, but are not limited to: vehicle mileage data and its change (km), vehicle GPS location data and its change (longitude and latitude), charging and consumption of a power battery within a time period corresponding to mileage or location change (kWh), whether the user turns on an intelligent driving mode, vehicle behavior data when the user drives and controls the vehicle (such as sharp turns and rapid acceleration), the user's interactive behavior data (such as the number of photos actively uploaded and the number of bytes) during travel, consumption behavior data and associated order data (such as travel order amount, travel charging order amount, and one-click shopping order amount on the vehicle screen in the automobile) and so on.

In the present disclosure, the digital equity certificate refers to digital token. The "target object" is used to indicate an account address corresponding to a target object who is qualified to be issued or granted a digital token in each round. Since the user's vehicle and the account address are in a one-to-one correspondence, the target object may also refer to the corresponding user's vehicle. "Target quota" is used to indicate the number of digital tokens issued to the target object in each round. Under normal circumstances, the same number of digital tokens may be obtained by each target object who is qualified to be granted a digital token in the same round.

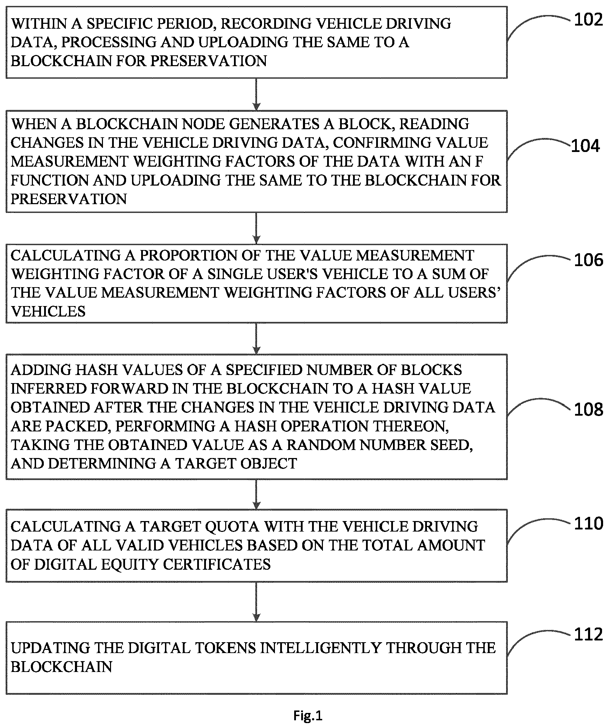

Specifically, as shown in FIG. 1, a blockchain-based method for processing vehicle driving data method 100 according to the present disclosure is illustrated. The method 100 includes decentralized on-chain preservation of vehicle driving data and rolling calculation of a value measurement weighting factor of the driving data. The blockchain-based processing method 100 is described below. At 102, within a specific period, driving data of vehicles is recorded and uploaded to a blockchain. At 104, when a blockchain node generates a block, changes in the vehicle driving data within the specific period are read from centralized data, the value measurement weighting factor (sometimes referred to as factor) of the data is confirmed with an f function based on the vehicle driving data. At 106, a proportion of the data value measurement weighting factor of single user vehicle to all the data value measurement weighting factors is calculated.

in some embodiments, Sigmoid function or a power function of similar functions, such as $\sqrt{x}$ , may also be used. The calculation principle of these functions is similar to the f function.

Further, as mentioned above, there are many types of vehicle driving data. In order to make full use of these data, the present disclosure adopts a normalized measurement method within a certain period to obtain value measurement weighting factors of users, such that the obtained value measurement weighting factors are more reliable. The normalized measurement refers to a unified measurement specification method adopted to allow the collected data of different dimensions to be correlated, compared, and calculated with each other. For example, the measurement of the mileage of a vehicle uses kilometers (km), the measurement of a certain type of data uploaded by a vehicle (such as photos or videos) uses megabytes (MB), and the measurement of the power consumption of a power battery uses kilowatt hours (kWh). Different types of data are given different weights and converted into the same metric.

Specifically, the normalized measurement may include four steps. In step 1, a unified metric is selected, such as mileage, megabytes or kilowatt hours. Without loss of generality, the present disclosure uses mileage as a unified measurement unit. In step 2, a proportion relationship is established to convert different types of data into the uniform measurement unit. For example, 10MB data is equivalent to 1km mileage. In another example, according to local conditions, different types of data from the vehicle of the same user are converted to the same measurement unit and weighted and consolidate, such that 10MB data is equivalent to 1km mileage $\times$ 0.97 weight points. In step 3, different types of data are converted into a uniform measurement unit and processed with an f function to obtain a data value measurement weighting factor of the vehicle data within a unit time period. For example, a vehicle has driven 1000km within a unit time period and uploaded 2000MB of data, and an autonomous driving mode is turned on at the same time (assuming that a weight coefficient of automatic driving is 2, i.e., doubling the original mileage of vehicle itself), then a comprehensive mileage measurement result after the two types of data of the vehicle are converted into a unified measurement unit is 1000km$\times$2 + (2000MB/10MB)$\times$1km = 2200km (assuming 10MB data equivalent to 1k) , and processed by the f function (example parameters k=0.005, $l_0$ =1650km) to obtain 0.93965, that is, the data value measurement weighting factor is 0.93965. It is also possible to use a Sigmoid function or a power function of similar functions instead of the f function. For example, $\sqrt{x}$ etc., is used to calculate the data value measurement weighting factor to play a similar role as the f function. In step 4, the data value measurement weighting factors of the vehicles of users within the unit time period form a set. A proportion of each factor to the whole is a probability that each user's vehicle will be issued a target quota of digital tokens. It is calculated that the proportion of the value measurement weighting factor of a vehicle of single user relative to a sum of the value measurement weighting factors of vehicles of all users

is: $$p[a] = \frac{\lambda[a]}{\sum_{j \in V} \lambda[j]}$$ , where V is a set of valid account addresses owned by the vehicles of the users, and $\lambda[a]=f(L[a])$ is the data value measurement weighting factor. In this way, different types of vehicle driving data can be fully used, the obtained value measurement weighting factor is more reliable, and it can also be ensured that the data value generated by a vehicle with more mileage measurements per unit time period corresponds to a higher probability of being issued a digital token than a vehicle with less mileage, and the data value measurement weighting factors of each vehicle corresponding to various measurement periods are uploaded to the chain for preservation to ensure fairness, justice, authenticity, tamper-proof and non-repudiation.

Further, at 108, the method may include: on a hash value obtained after the changes in the vehicle driving data are packed, adding hash values of a predetermined number of blocks in the blockchain inferred forward from a time point of calculation (or a calculation time point), and then hashing the added hash value (i.e., the hash value obtained from the adding step) to obtain a hash value for use as a random number seed (sometimes referred to as "the seed"), and determining the target object with-the random number seed. It should be understood that the factor determines a probability that a user becomes a target object (i.e., the user obtains a digital equity), and the seed ultimately determines the target object (i.e., which user ultimately obtains the digital equity). In theory, the higher the probability, the easier the user being selected as the target object, but it does not mean that the user must be selected as the target object by the seed, both of which have randomness. It is this kind of randomness that makes the process of determining the target object reflect fairness and justice.

Further, at 110, the method may include calculating or determining a target quota based on a total amount of digit equity certificates and all valid vehicle driving data. For example, based on the above, in different predetermined time periods the vehicles of all users that meet rules are evaluated and recognized for their values, and the target object is calculated according to a public fair algorithm and issued target quota of digital equity certificates. In some embodiments, in the present disclosure, vehicle mileage is used as a typical representative (or metric) of data generated by a vehicle, and the target quota of digital tokens issued to a user is positively correlated with the total vehicle mileage. That is, the more mileage for a user, the more digital equity certificates that may be potentially issued to the user. In some embodiments, at 112, the method may further include updating the digit tokens in a transaction manner through a smart contract of the blockchain.

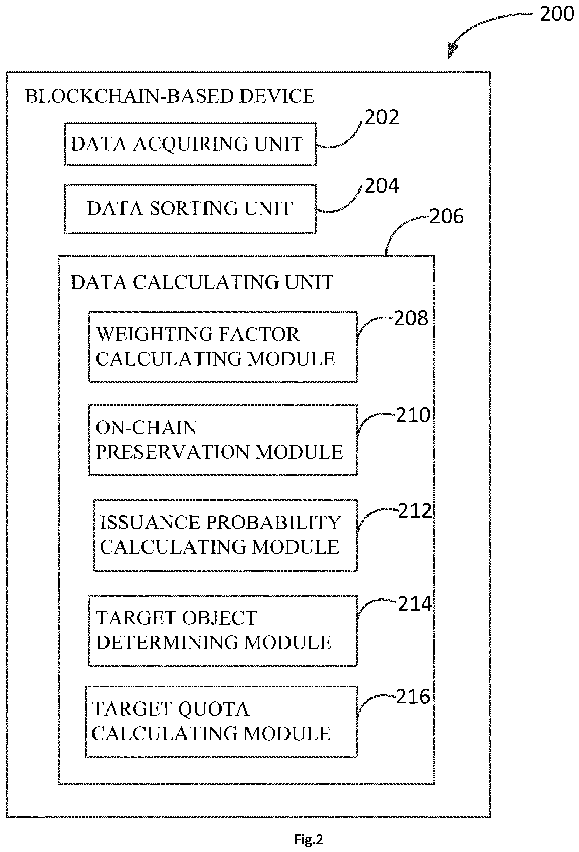

The present disclosure also discloses a blockchain-based device for processing vehicle driving data. Referring to FIG. 2, the blockchain-based device 200 comprises a data acquiring unit 202, a data sorting unit 204, and a data calculating unit 206. The data acquiring unit 202 is configured to obtain vehicle driving data of a vehicle. The data sorting unit 204 is configured to perform data consolidating cleaning or cleansing on the acquired vehicle driving data, perform quality inspection and validation, deduplicate errors and unreasonable data, and perform decentralized on-chain preservation of the processed data with a blockchain. The data calculating unit 206 is configured to evaluate and recognize the value of all user vehicles that meet rules within different predetermined time periods, convert the processed vehicle driving data into value measurement weighting factors, calculate a target object, and issue a digital token thereto.

The data calculating unit 206 may comprise a weighting factor calculating module 208, an on-chain preservation module 210, an issuance probability calculating module 212, a target object determining module 214, and a target quota calculating module 216. The weighting factor calculating module 208 is configured to, when the blockchain node generates a block, record hash values of the changes in the driving data collected by a blockchain node and a transaction record of the driving data uploaded to the blockchain , reads the changes in the vehicle driving data of each vehicle within a rolling period from centralized data, and calculates a value measurement weighting factor based on the driving data with an f function. The issuance probability calculating module 212 is configured to calculate a proportion of a value measurement weighting factor of a single user vehicle to a sum of value measurement weighting factors of all users vehicles. The on-chain preservation module 210 is configured to pack the value measurement weighting factor, perform a hash operation thereon, and upload the hash result to the blockchain for preservation. The target object determining module 214 is configured to, on a hash value obtained after the changes in the vehicle driving data are packed, add hash values of a specified number of blocks in the blockchain inferred forward from a calculation time point, and then perform a hash operation on the obtained result, use the obtained hash value as a random number seed, and determine the target object based on the random number seed. The target quota calculating module 216 is configured to use the vehicle driving data of all valid vehicles collected by the blockchain node to calculate a target quota based on the total amount of digital equity certificates.

The present disclosure is further described in detail below in conjunction with specific embodiments. It should also be understood that the following examples are only used to further illustrate the present disclosure, and cannot be construed as limiting the scope of protection of the present disclosure. Some non-essential improvements and adjustments made by those skilled in the art based on the above content of the present disclosure belong to the scope of protection of the present disclosure. The specific process parameters in the following examples are only an example of appropriate ranges, that is, those skilled in the art can make selections within the appropriate range through the description herein, and are not limited to the specific values in the following examples.

The present disclosure includes or relates to blockchain networks, Internet of Vehicles, centralized and decentralized databases, etc. In one example, vehicle driving data is uploaded to a centralized database within a unit time period (e.g., 1 minute as interval), the change in the total vehicle mileage during the time period is calculated once an hour, and a hash value of the data packet is uploaded to the blockchain for preservation..

In some embodiments, the step of acquiring the vehicle driving data of the vehicle (via the data acquiring unit for example) and the step of sorting and preserving the same on the chain (via the sorting unit for example) may be realized by the prior arts and will not be repeated here.

When a blockchain node generates a block, it reads the mileage change of each user within a rolling period (e.g., the past 30 days, that is, 720 hours) from a centralized database, and additionally records hash values of the mileage change data packets of all users. The weighting factor calculating module 208 adopts a normalized measurement method to calculate a value measurement weighting factor according to the mileage change with an f function. A proportion of the value measurement weighting factor of a single user to a sum of the value measurement weighting factors of all users in this round is a probability that the user will obtain a digital token in this round of target quota issuance. The on-chain preservation module 210 packs the value measurement weighting factor, performs a hash operation thereon. The hash value obtained after the hash operation on the packed value measurement weighing factor may be defined as a first hash value. The on-chain preservation module 210 uploads the first hash value to the blockchain for preservation. A second hash value of a specified/predetermined number of blocks inferred forward from a calculation time point may be acquired and added to the first hash value to obtain a third hash value. A hash operation is performed on the third value to obtain the fourth hash value, and the fourth hash value is taken as a random number seed to determine the final issuance object. The specific number of blocks is not limited to the following examples, and may be adjusted depending on the scene, as long as it is a natural number greater than or equal to 1. The embodiments will be described in detail below. Letters representing counts or parameters, such as i and k, do not have fixed definitions, that is, the definitions represented by the letters are specified by different calculation formulas or different descriptions.

A user vehicle or the blockchain account address of a user is recorded as a, and the blockchain account status is recorded as $\sigma[a]$, which includes various token quantity balances:

$\sigma[a]_b$: the quantity balance of native tokens of the blockchain owned by the account, that is, the number of native tokens;

$\sigma[a]_{mltb}$ = ml_token_balances[a]: the quantity balance of mileage tokens (MLtoken) owned by the address account a is queried through a smart contract, and ml_token_balances represents an array of the quantity balance of mileage tokens in the smart contract; and

$\sigma[a]_{latb}$ = la_token_balances[a]: the quantity balance of digital tokens (LA tokens) owned by the address account a is queried through the smart contract, and la token balances represents an array of the quantity balance of digital tokens in the smart contract.

Those skilled in the art should understand that the above only illustrates a part of the data and is not exhaustive.

Regarding obtaining the value measurement weighting factor, the weighting factor calculating module 208 records F as an evaluation function. The more the final state $\sigma$ is in line with a predetermined purpose, the higher the value of F will be. The optimal digital token issuing mechanism may be obtained by solving the following calculation formula of the optimal value measurement weighting factor: $f^* = \text{argmax}_f F(\sigma)$, where f represents a variable of the value measurement weighting factor function, and $f^*$ is the optimal solution off when the evaluation function $F(\sigma)$ reaches the maximum value, that is, an instance of f.

In the present disclosure, assuming that the cumulative number of digital tokens obtained by each user conforms to a normal distribution, a random variable X is used to represent the number of digital tokens obtained by the user vehicle account, that is, $\sigma[a]_{latb}$, then: $\overline{X} = \frac{1}{n}\sum_1^n x_i$, $\overline{X}$ is a sample mean, and $x_i$ is a random sample of X that is observed or collected,

$$F(\sigma) = \text{Var}(X) = E[\frac{1}{n}\sum_1^n (x_i - \mu)^2],$$

where Var represents a variance of X, $\mu$ is a mean of X, and replacing $\mu$ with the unbiased estimation $\overline{X}$ to obtain the following:

$$F(\sigma) = \text{Var}(X) = E[\frac{1}{n}\sum_1^n (x_i - \overline{X})^2],$$

The value of $F(\sigma)$ may be determined according to the purpose and effect pursued by the digital token issuing mechanism and combined with the variance Var(X). For example, if we expect that after multiple rounds of issuances, the gap in the number distribution of digital tokens among vehicle accounts will become larger, then the greater the Var(X), the greater the value of $F(\sigma)$. On the contrary, if we expect that after multiple rounds of issuances, the number distribution of digital tokens among the vehicle accounts tends to be even, then the smaller the Var(X), the larger the value of $F(\sigma)$.

When the i-th round of digital tokens is issued, the number of tokens of this round of digital tokens is recorded as $R_i$. The mileage change $L[a]$, of the vehicle owner (account address a) during a previous rolling unit time period (without loss of generality, the present disclosure uses the past 30 days, that is, within 720 hours of rolling) is read from a centralized database. In the actual calculation, more often it will be converted into a mileage token change or even other changes for calculation, which is not limited here. Specifically, mileage tokens and mileage are corresponding, but the mileage tokens stored on the blockchain are reasonable mileage after cleansing. In other words, fraudulent or problematic mileage will be cleaned out to prevent data tampering, etc., to ensure the accuracy and fairness of the calculation results. V is recorded as a set of valid blockchain accounts for all users vehicles, and h is recorded as a given publicly available 256-bit hash function, then $(i, h(\{L[a]: a \in V\}))$ is a pair of issuance rounds-data packet hash value that needs to be preserved on the chain. The calculation formula for the value measurement weighting factor of the driving data is as follows:

$$f(l_0, k, l) = \frac{1}{1+e^{-k(l-l_0)}} - \frac{1}{1+e^{k l_0}}$$

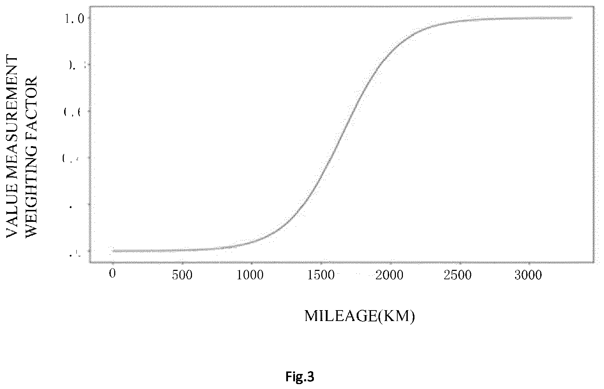

, where 1 represents a mileage variable, k is a control parameter, and lo is a constant. FIG. 3 is a graph showing a relationship between the value measurement weighting factor and mileage data. Fig. 3 illustrates an example of an f function image wherein when k=0.005, lo=1650km. As shown in FIG. 3, [1200km, 2100km] is approximately a mileage interval that has the greatest impact on the value measurement weighting factor.

The purpose of the f function is to maximize the marginal revenue of mileage at $l=l_0$. k may be used to control the range of effective mileage 1 that may participate in the target object qualification competition and has the greatest impact on the value measurement weighting factor. The larger the k, the closer the function is to a step function, and the smaller the k, the closer the function is to a linear function.

Then, the on-chain preservation module 210 packs the calculated value measurement weighting factor, performs a hash operation thereon, and uploads the same to the blockchain for preservation. A hash value thus obtained is defined as a first hash value.

Next, the issuance probability calculating module 212 records $\lambda[a]=f(l_0,k,L[a])$ as the value measurement weighting factor, and calculate a proportion of the value measurement weighting factor to the whole, that is, a probability that a user vehicle obtains a target object qualification (to be issued a digital token) in this round is:

$$p[a] = \frac{\lambda[a]}{\sum_{j \in V} \lambda[j]}, \text{ and } \sum_{a \in V} p[a] = 1,$$

In addition, as mentioned above, the present disclosure converts different types of data from the same user vehicle into the same measurement unit through normalized measurement when calculating the value measurement weighting factor, and weights and consolidates the same, thereby further ensuring the accuracy of the calculation and enabling that the data value generated by a vehicle with more mileage within a unit time period is more likely to be issued a digital token than a vehicle with less mileage.

Regarding obtaining the random number seed, the target object determining module 214 defines B[0] as the current block, and records B[k] as the k-th block relative to B[0]. When k<0, B[k] is represented as the $|k|_{th}$ block before B[0]. The random number seed s is generated after a hash value of the kth ($k \in \{-255,\cdots,-1,0\}$) block before the current block B[0] (defined as a second hash value) is added to the hash value (i.e., the first hash value) after the changes in the vehicle driving data $L[a]_k$ are packed to obtain a third hash value and the result (the third hash value) is hashed again to obtain a fourth hash value. The final winning account address w is calculated from s and p. A simple way to achieve this is: within a number axis interval $[0, 2^{256}]$, each effective address a is assigned a $[2^{256} \cdot p[a]]$-sized interval in sequence, and the effective address w corresponding to the interval in which the random number s falls is the account address of the user vehicle which is qualified to be issued a target quota of digital tokens.

Thus, through the random number seed and the issuance probability of the address account a, the account address of the target object for the i-th round of issuance of digital tokens may be calculated as:

$$A_i = [a_{win1}(i), a_{win2}(i), \dots, a_{win_x}(i)]$$, and without loss of generality, assuming that the target object is one person and recorded as $a_{win}$. In other words, the target object is finally determined through the random number seed s. After the target object is determined, a corresponding digital equity certificate shall be issued to the target object.

Regarding the calculation of the target quota, the target quota calculating module 216 records the total amount of digital equity certificates as $T_{total}$. The consumption or attenuation rate of digital tokens caused by continuous issuance refers to being attenuated to A% of the previous one every $P_{epoch}$ year, that is, the attenuation factor is A%, and a time sequence of decay periods formed every $P_{epoch}$ year may be expressed as: $\{E_m = m\}, m = 0,1,2,.....$, where m represents the sequence of decay periods.

The frequency of issuance of digital tokens is evenly distributed according to the time interval, and the interval is recorded as $l_{interval}$ minutes (mins), that is, the number of digital equities issued in each round every $P_{epoch}$ year is the same, and the total number of digital equities issued every $P_{epoch}$ year constitutes a geometric progression and is denoted as:

$$R_{E_0} = T_{total} * (1-A\%), R_{E_1} = R_{E_0} * A\%, \cdots, R_m = R_{E_0} * (A\%)^m, \cdots$$

Note that the i-th round falls in the $E_{i\,th}$ decay period, then $E_i = [i/(P_{epoch}*365*24*60/l_{interval})]$,

The number of users vehicles (i.e., the number of accounts) participating in the i-th round of digital equity issuance is recorded as $n_i$, assuming that on average, one user vehicle among every $G_{group\_size}$ user vehicles has the opportunity to be issued a digital token, and the target quota of digital tokens issued to any target user vehicle is denoted as $r_i$, then:

$$r_0 = R_{E_0} \, / \, (P_{epoch}*365*24*60/I_{interval}) \, / \lceil n_0/G_{group\_size} \rceil ,$$

and

$$r_i = R_{E_i} \, / \, (P_{epoch}*365*24*60/I_{interval}) \, / \lceil n_i/G_{group\_size} \rceil .$$

It can be seen that, in the i-th round, the number of digital tokens issued to the selected target object is $r_i$ (i.e., the target quota), and $\sigma[a]_{latb}$ is updated to $\sigma[a]_{latb}+r_i$ after issuance (i.e., a new digital token quantity balance will be formed), and then the value of the target object's digital token quantity balance $\sigma[a]_{latb}$ = la_token_balances[a] is updated by the blockchain smart contract in a transaction fashion to the new digital token quantity balance mentioned above, and then it may participate in the (i+1)-th round based on the updated value. In addition, those skilled in the art should understand that $\sigma[a]_{mltb}$=ml_token_balances[a] is updated in real time by way of transactions through the blockchain smart contract according to the mileage change.

In actual operation, the calculation of the above-mentioned target object and the target quota may be performed relatively independently.

In one aspect, the blockchain-based method for processing vehicle driving data of the present disclosure may be implemented in an electronic device. The electronic device may comprise at least one processor, and at least one memory configured to store instructions executable by the at least one processor; wherein the at least one processor, when executing the instructions, is caused to perform the methods disclosed in the present disclosure.

According to the embodiments of the present disclosure, the effective and fair value measurement is performed on the driving data in the automotive field. The value of users vehicles is evaluated and recognized within different predetermined periods of time. A target object is calculated according to a publicly available fairness algorithm. The mileage of the user vehicles is converted into a value measurement weighting factor. In this way, in combination with the blockchain technology, the fairness, non-tamperability, trustworthiness, and traceability of the value measurement of the data generated by the vehicles are realized and the vehicle users are given prescribed rewards. As the users can gradually get more rewards through the accumulation of mileage, the enthusiasm and initiative of daily driving are enhanced with the expectation of obtaining more value returns, and thus a positive incentive and feedback mechanism and a virtuous ecological cycle can be established.

The following section describes additional aspects and features of the method and system for processing vehicle driving data to measure value of users and user vehicle data, determine a target object and issue a target quota of digital equity certificates, without limitation as a series of paragraphs, some or all of which may be alphanumerically designated for clarity and efficiency. Each of these paragraphs can be combined with one or more other paragraphs, and/or with disclosure from elsewhere in this application, in any suitable manner. Some of the paragraphs below may expressly refer to and further limit other paragraphs, providing without limitation examples of some of the suitable combinations.

A0. A blockchain-based method for processing vehicle driving data to measure value of users and user vehicle data, determine a target object and issue a target quota of digital equity certificates, the method comprising:

performing on-chain preservation of the vehicle driving data, wherein performing the on-chain preservation of the vehicle driving data comprising: within a specific period, recording the vehicle driving data, processing the vehicle driving data by consolidating cleaning or cleansing, and uploading the processed vehicle driving data to a blockchain for preservation; and

rolling calculation of a value measurement weighting factor of the vehicle driving data, wherein the rolling calculation comprising: when a blockchain node generates a block, reading the vehicle driving data and changes of the vehicle driving data within the specific period from centralized data, confirming value measurement weighting factors of the data with an f function based on the vehicle driving data, packing the value measurement weighting factors, performing a hash operation on the packed value measurement factors to obtain a first hash value and uploading the first hash value to the blockchain.

A1. The method of paragraph A0, further comprising calculating a proportion of a value measurement weighting factor of a single user vehicle to a sum of the value measurement weighting factors of all user vehicles and the proportion is used as a probability that each user vehicle is selected as the target object.

A2. The method of paragraph A0, further comprising: on the first hash value, adding a second hash value of a specified number of blocks in the blockchain inferred forward from a calculation time point to obtain a third hash value;

performing a hash operation on the third hash value to obtain a fourth hash value, taking the fourth hash value as a random number seed, and determining the target object through the random number seed.

A3. The method of paragraph A0, wherein: the value measurement weighting factors are obtained through normalized measurement, and the normalized measurement comprises:

selecting a unified metric in the vehicle data;
establishing a proportion relationship for converting different types of vehicle data into a uniform measurement unit and performing conversion;
confirming the value measurement weighting factors of the data with the f function based on the vehicle driving data; and
forming a set with the data value measurement weighting factors of all user vehicles within a unit time period, and calculating a proportion of each data value measurement weighting factor in the set.

A4. The method of paragraph A0, further comprising:
based on the total amount of digital equity certificates, calculating the target quota using the vehicle driving data of all valid vehicles collected by the blockchain node .

A5. The method of paragraph A0, wherein data after the target quota is issued to the target object is updated in a transaction manner through a smart contract of the blockchain.

A6. The method of paragraph A0, wherein the vehicle driving data is vehicle mileage, vehicle location change, or vehicle power battery energy consumption.

B0. A blockchain-based device for processing vehicle driving data, comprising:

a data acquiring unit configured to acquire vehicle driving data of a vehicle;
a data sorting unit configured to perform data consolidating cleaning or cleansing on the acquired vehicle driving data, perform quality inspection and validation, deduplicate errors and unreasonable data, and upload the processed data to a blockchain for preservation through the blockchain; and
a data calculating unit configured to evaluate and recognize the value of all user vehicles that meet rules within different predetermined time periods, convert the processed vehicle driving data into value measurement weighting factors, pack the value measurement weighting factors, perform a hash operation on the packed value measurement weighting factors to obtain a first hash value, upload the first hash value to the blockchain for preservation, calculate a target object, and issue a digital token to the target object.

B1. A blockchain-based device of paragraph B0, wherein the data calculating unit comprises:

a weighting factor calculating module configured to read changes in the vehicle driving data within a specific period from centralized data when a blockchain node generates a block, and calculate the value measurement weighting factors with an f function based on the vehicle driving data; and
an on-chain preservation module configured to pack the value measurement weighting factors, perform a hash operation thereon and upload the hash result after the hash operation to the blockchain for preservation.

B2. A blockchain-based device of paragraph B0, wherein the data calculating unit further comprises: an issuance probability calculating module configured to calculate a proportion of the value measurement weighting factor of a single user vehicle to a sum of the value measurement weighting factors of all user vehicles as a probability that the single user vehicle is selected as the target object.

B3. A blockchain-based device of paragraph B0, wherein the data calculating unit further comprises: a target object determining module configured to add, on the first hash value obtained after the changes in the vehicle driving data are packed, second hash value of a specified number of blocks in the blockchain inferred forward from a calculation time point of calculation to obtain a third hash value, perform a hash operation on the third hash value to obtain a fourth hash value, take the fourth hash value as a random number seed, and determine the target object with the random number seed.

B4. A blockchain-based device of paragraph B0, wherein the data calculating unit further comprises: a target quota calculating module configured to calculate a target quota using the vehicle driving data of all valid vehicles collected by the blockchain node based on the total amount of digital equity certificates.

C0. A system for processing vehicle driving data, comprising: a data monitoring device located at a vehicle; and the blockchain-based device for processing vehicle driving data as described in any paragraph of paragraphs B0 to B4.

D0. An electronic device, comprising: at least one processor, and at least one memory configured to store instructions executable by the at least one processor; wherein the at least one processor, when executing the instructions, is caused to perform the method of paragraphs A0 to paragraph A6.

E0. A non-transitory computer-readable storage medium storing at least one instruction thereon, wherein the at least one instruction, when executed by a processor, causes the processor to perform the method of paragraphs A0 to paragraph A6.

The above specific embodiments further describe the objectives, technical solutions and beneficial effects of the present disclosure in detail. It should be understood that the above is only a specific embodiment of the present disclosure and is not limited to the scope of protection of the present disclosure. Without departing from the basic characteristics of the present disclosure, the present disclosure can be embodied in various forms. Therefore, the embodiments of the present disclosure are for illustration rather than limitation. Because the scope of the present disclosure is defined by the claims rather than the description, all changes falling within the scope defined by the claims or an equivalent scope thereof shall be construed as being included in the claims.

**Claims**

1. A blockchain-based method for processing vehicle driving data to measure value of users and user vehicle data, determine a target object and issue a target quota of digital equity certificates, the method comprising:

   performing on-chain preservation of the vehicle driving data, wherein performing the on-chain preservation of the vehicle driving data comprising: within a specific period, recording the vehicle driving data, processing the vehicle driving data by consolidating cleaning or cleansing, and uploading the processed vehicle driving data to a blockchain for preservation; and
   rolling calculation of a value measurement weighting factor of the vehicle driving data, wherein the rolling calculation comprising: when a blockchain node generates a block, reading the vehicle driving data and changes of the vehicle driving data within the specific period from centralized data, confirming value measurement weighting factors of the data with an f function based on the vehicle driving data, packing the value measurement weighting factors, performing a hash operation on the packed value measurement factors to obtain a first hash value and uploading the first hash value to the blockchain.

2. The blockchain-based method according to claim 1, further comprising:
   calculating a proportion of a value measurement weighting factor of a single user vehicle to a sum of the value measurement weighting factors of all user vehicles and the proportion is used as a probability that each user vehicle is selected as the target object.

3. The blockchain-based method according to any of claim 1 or 2, further comprising:
   on the first hash value, adding a second hash value of a specified number of blocks in the blockchain inferred forward from a calculation time point to obtain a third hash value; performing a hash operation on the third hash value to obtain a fourth hash value, taking the fourth hash value as a random number seed, and determining the target object through the random number seed.

4. The blockchain-based method according to any of claims 1 to 3, wherein:
   the value measurement weighting factors are obtained through normalized measurement, and the normalized measurement comprises:

   selecting a unified metric in the vehicle data;
   establishing a proportion relationship for converting different types of vehicle data into a uniform measurement unit and performing conversion;
   confirming the value measurement weighting factors of the data with the f function based on the vehicle driving data; and
   forming a set with the data value measurement weighting factors of all user vehicles within a unit time period, and calculating a proportion of each data value measurement weighting factor in the set.

5. The blockchain-based method according to any of claims 1 to 4, further comprising:
   based on a total amount of digital equity certificates, calculating the target quota using the vehicle driving data of all valid vehicles collected by the blockchain node .

6. The blockchain-based method according to any of claims 1 to 5, wherein data after the target quota is issued to the target object is updated in a transaction manner through a smart contract of the blockchain.

7. The blockchain-based method according to any of claims 1 to 6, wherein the vehicle driving data is vehicle mileage, vehicle location change, or vehicle power battery energy consumption.

8. An electronic device, comprising:

at least one processor, and
at least one memory configured to store instructions executable by the at least one processor;
wherein the at least one processor, when executing the instructions, is caused to perform the method according to any of claims 1 to 7.

9. A system for processing vehicle driving data, comprising:

a data monitoring device located at a vehicle; and
the blockchain-based device for processing vehicle driving data as defined in claim 8

10. A machine-readable storage medium that stores executable instructions that, when being executed, cause the machine to perform the processing method as defined in any one of claims 1 to 7.

| WITHIN A SPECIFIC PERIOD, RECORDING VEHICLE DRIVING DATA, PROCESSING AND UPLOADING THE SAME TO A BLOCKCHAIN FOR PRESERVATION | 102 |

| WHEN A BLOCKCHAIN NODE GENERATES A BLOCK, READING CHANGES IN THE VEHICLE DRIVING DATA, CONFIRMING VALUE MEASUREMENT WEIGHTING FACTORS OF THE DATA WITH AN F FUNCTION AND UPLOADING THE SAME TO THE BLOCKCHAIN FOR PRESERVATION | 104 |

| CALCULATING A PROPORTION OF THE VALUE MEASUREMENT WEIGHTING FACTOR OF A SINGLE USER'S VEHICLE TO A SUM OF THE VALUE MEASUREMENT WEIGHTING FACTORS OF ALL USERS' VEHICLES | 106 |

| ADDING HASH VALUES OF A SPECIFIED NUMBER OF BLOCKS INFERRED FORWARD IN THE BLOCKCHAIN TO A HASH VALUE OBTAINED AFTER THE CHANGES IN THE VEHICLE DRIVING DATA ARE PACKED, PERFORMING A HASH OPERATION THEREON, TAKING THE OBTAINED VALUE AS A RANDOM NUMBER SEED, AND DETERMINING A TARGET OBJECT | 108 |

| CALCULATING A TARGET QUOTA WITH THE VEHICLE DRIVING DATA OF ALL VALID VEHICLES BASED ON THE TOTAL AMOUNT OF DIGITAL EQUITY CERTIFICATES | 110 |

| UPDATING THE DIGITAL TOKENS INTELLIGENTLY THROUGH THE BLOCKCHAIN | 112 |

Fig.1

200

BLOCKCHAIN-BASED DEVICE

DATA ACQUIRING UNIT — 202

DATA SORTING UNIT — 204

— 206

DATA CALCULATING UNIT

WEIGHTING FACTOR
CALCULATING MODULE — 208

ON-CHAIN
PRESERVATION MODULE — 210

ISSUANCE PROBABILITY
CALCULATING MODULE — 212

TARGET OBJECT
DETERMINING MODULE — 214

TARGET QUOTA
CALCULATING MODULE — 216

Fig.2

Fig.3

Europäisches
Patentamt

European
Patent Office

Office européen
des brevets

# EUROPEAN SEARCH REPORT

Application Number

EP 21 21 6979

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/046797 A1 (LABYRINTH RES LLC [US]) 5 March 2020 (2020-03-05) | 1,2,4-10 | INV. H04L9/00 G06F21/64 H04L9/32 |
| A | * paragraph [0007] * | 3 | |
| | * paragraph [0009] * | | |
| | * paragraph [0226] * | | |
| | * paragraph [0315] * | | |
| | * paragraph [0088] * | | |
| | * paragraph [0089] – paragraph [0090] * | | |
| | * paragraph [0108] * | | |
| | * paragraph [0185] * | | |
| | * paragraph [0195] * | | |
| | * paragraph [0194] * | | |
| | * paragraph [0187] – paragraph [0188] * | | |
| | * figures 1,5 * | | |
| | * paragraph [0196] * | | |
| | * paragraph [0191] – paragraph [0193] * | | |
| | * paragraph [0212] * | | |
| | * paragraph [0122] * | | |
| | ----- | | |
| A | US 2020/090203 A1 (REICHENBACH CHRISTIAN [DE] ET AL) 19 March 2020 (2020-03-19) | 1-10 | |
| | * paragraph [0065] * | | TECHNICAL FIELDS SEARCHED (IPC) |
| | * paragraph [0080] * | | |
| | * paragraph [0082] * | | H04L |
| | * paragraph [0017] * | | G06F |
| | * paragraph [0014] * | | |
| | ----- | | |
| A | KR 102 226 951 B1 (QUANTUM GATE INC [KR]) 11 March 2021 (2021-03-11) | 1-10 | |
| | * paragraph [0015] * | | |
| | * paragraph [0023] * | | |
| | ----- | | |

The present search report has been drawn up for all claims

| Place of search | Date of completion of the search | Examiner |
|---|---|---|
| Munich | 11 May 2022 | Dobre, Dan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 6979

11-05-2022

| Patent document cited in search report | | Publication date | Patent family member(s) | | Publication date |
|---|---|---|---|---|---|
| WO 2020046797 | A1 | 05-03-2020 | NONE | | |
| US 2020090203 | A1 | 19-03-2020 | US 2020090203 | A1 | 19-03-2020 |
| | | | US 2020090207 | A1 | 19-03-2020 |
| | | | US 2020090208 | A1 | 19-03-2020 |
| KR 102226951 | B1 | 11-03-2021 | NONE | | |

EPO FORM P0459

For more details about this annex : see Official Journal of the European Patent Office, No. 12/82